# EUROPÄISCHE PATENTSCHRIFT

(11) **EP 3 142 882 B1**
(45) Veröffentlichungstag und Bekanntmachung des Hinweises auf die Patenterteilung: **11.07.2018**
(21) Anmeldenummer: 15722180.5
(22) Anmeldetag: 11.05.2015
(51) Int. Cl.: B60J 7/02, B60J 7/043, B60J 7/19

(54) **ANORDNUNG MIT EINEM DECKEL FÜR EIN FAHRZEUGDACH**
ARRANGEMENT WITH A COVER FOR A VEHICLE ROOF
DISPOSITIF D'UN COUVERCLE POUR UN TOIT DE VÉHICULE

(30) Priorität: 14.05.2014 DE 102014106808; 28.07.2014 DE 102014110626
(43) Veröffentlichungstag der Anmeldung: 22.03.2017
(73) Patentinhaber: Webasto SE, 82131 Stockdorf (DE)
(72) Erfinder: HÖLZEL, Dominik, 82140 Olching (DE)
(74) Vertreter: Epping - Hermann - Fischer
(86) Internationale Anmeldenummer: PCT/EP2015/060337
(87) Internationale Veröffentlichungsnummer: WO 2015/173177

(56) Entgegenhaltungen:
- EP-A1- 0 555 977
- EP-A1- 1 275 541
- EP-A1- 2 650 156
- DE-A1-102006 010 755
- US-A1- 2009 072 589

## Beschreibung

Die Erfindung betrifft eine Anordnung mit einem Deckel für ein Fahrzeugdach, der ausgehend von einer Schließstellung zum Verschließen einer Dachöffnung zum Öffnen durch Ausstellmittel in seinem hinteren Bereich anhebbar und nach hinten über das Fahrzeugdach in eine Offenstellung verschiebbar ist.

Derartige Anordnungen mit einem Deckel für ein Fahrzeugdach sind aus dem Stand der Technik vielfach bekannt. Bei einem Öffnungsvorgang einer Dachöffnung wird typischerweise ein Antriebsschlitten in Fahrzeuglängsrichtung nach hinten verschoben. In seitlichen Bereichen des Deckels sind Ausstellmittel vorgesehen, um den Deckel anzuheben, bevor er weiter nach hinten in eine Offenstellung zum maximalen Freigeben der Dachöffnung verschoben wird.

Zum Anheben oder Ausstellen des Deckels wird mittels des Antriebsschlittens eine Ausstellstange in Fahrzeuglängsrichtung nach hinten verschoben, welche über einen hinteren Ausstellhebel mit dem Deckel im hinteren Bereich gekoppelt ist. Anschließend wird, wenn der Deckel maximal ausgestellt beziehungsweise angehoben worden ist, bei einem weiteren Verschieben des Schlittens die Ausstellstange in der Führungsschiene verriegelt, so dass diese und auch der hintere Ausstellhebel in ihrer Position arretiert sind.

Aus der EP 0 555 977 A1 ist eine Offendachkonstruktion für ein Fahrzeug bekannt. Aus der EP 1 275 541 A1 ist ein Modul, insbesondere Schiebedachmodul für ein Fahrzeug bekannt. Aus der US 2009/072589 A1 ist eine Schiebdachvorrichtung bekannt.

Aus der EP 2 650 156 A1 ist ebenfalls eine Schiebdachvorrichtung bekannt.

Eine Aufgabe, die der Erfindung zugrunde liegt, ist es, eine Anordnung mit einem Deckel für ein Fahrzeugdach zu beschreiben, welche ein sicheres Verriegeln der Ausstellstange ermöglicht.

Erfindungsgemäß wird eine Anordnung mit einem Deckel für ein Fahrzeugdach beschrieben, der ausgehend von einer Schließstellung zum Verschließen einer Dachöffnung zum Öffnen durch Ausstellmittel in seinem hinteren Bereich anhebbar und nach hinten über das Fahrzeugdach in eine Offenstellung verschiebbar ist. Die Ausstellmittel weisen einen in Fahrzeuglängsrichtung mittels eines Antriebs in einer Führungsschiene verschiebbaren Schlitten auf. Weiter weisen die Ausstellmittel eine mittels des Schlittens in Fahrzeuglängsrichtung verschiebbare Ausstellstange mit einem Koppelelement auf, wobeidie Ausstellstange in der Schließstellung des Deckels mit dem Schlitten gekoppelt ist. Die Ausstellmittel weisen des Weiteren eine bezüglich der Führungsschiene ortsfest ausgebildete Tasche auf, welche in ihrer Formgebung an das Koppelelement der Ausstellstange angepasst ist. Zudem weisen die Ausstellmittel ein weiteres Koppelelement und eine Verriegelungskulisse auf, wovon die Ausstellstange das Eine und der Schlitten das jeweils Andere aufweist. Ausgehend von der Schließstellung des Deckels ist die Ausstellstange bei einem Verschieben des Schlittens in Fahrzeuglängsrichtung nach hinten in einer Auskoppelebene von dem Schlitten entkoppelbar. Bei einem weiteren Verschieben des Schlittens ist die Ausstellstange relativ zu der Führungsschiene formschlüssig verriegelbar. Zum Verriegeln sind das weitere Koppelelement sowie die Verriegelungskulisse derart miteinander in Eingriff, dass ein Einführen des Koppelelements der Ausstellstange im Wesentlichen in Normalenrichtung der Auskoppelebene in die Tasche steuerbar ist.

Das Verschieben des Deckels über das Fahrzeugdach bedeutet, dass der Deckel nach einem Anheben oder Ausstellen im Bereich einer hinteren Kante des Deckels über eine Außenseite des Fahrzeugdachs geschoben wird. Bevorzugt handelt es sich bei der Anordnung um eine Anordnung für ein Spoilerdach.
Die verwendeten Ortsangaben oder Richtungsangaben wie in "hinten" oder "vorne" sind auf die Fahrzeuglängsrichtung bezogen. Die Fahrzeuglängsrichtung kann auch als Horizontalrichtung oder X-Richtung des mathematischen Rechtssystems bezeichnet werden. Das Ausstellen oder Anheben des Deckels erfolgt im Wesentlichen in einer Vertikalrichtung beziehungsweise Z-Richtung des mathematischen Rechtssystems. Unter dem hinteren Bereich des Deckels ist beispielsweise der Bereich zu verstehen, welcher ausgehend von einer Mitte des Deckels einem Fahrzeugheck zugewandt ist.

"Im Wesentlichen in Normalenrichtung" umfasst auch Richtungen unter einer geringen Winkelabweichung zu der Normalenrichtung der Auskoppelebene.

Die Anordnung sieht vor, dass die Ausstellstange ausgehend von der Schließstellung des Deckels mittels des Schlittens in Fahrzeuglängsrichtung nach hinten zum Ausstellen eines hinteren Ausstellhebels verschiebbar ist. Bei einem weiteren Verschieben des Schlittens entkoppelt die Ausstellstange von dem Schlitten in der Auskoppelebene. In anderen Worten wird eine Kopplung zur Mitnahme der Ausstellstange mittels des Schlittens in Fahrzeuglängsrichtung nach hinten gelöst.

Unter der Auskoppelebene wird diejenige Ebene verstanden, in welcher die Kopplung zwischen dem Schlitten und der Ausstellstange gelöst wird. Beispielsweise ist die Ausstellstange über ein Eingriffselement wie das Koppelelement, einen Nocken, einen Bolzen, ein anderes Gleitelement oder dergleichen mit dem Schlitten gekoppelt, so dass der Schlitten beim Verschieben in Fahrzeuglängsrichtung nach hinten die Ausstellstange mitnimmt. Dies bedeutet, dass die Ausstellstange mit dem Schlitten in X-Richtung verriegelt ist. Nach dem Ausstellen des hinteren Ausstellhebels mittels der Ausstellstange entkoppelt die Ausstellstange von dem Schlitten, wobei das Eingriffselement von dem Schlitten gelöst wird. Dabei ist die Ausstellstange nicht mehr in X-Richtung mit dem Schlitten verriegelt. Das Lösen erfolgt dabei in der Auskoppelebene, welche von der X-Richtung und einer zur X-Richtung senkrechten Richtung aufgespannt wird, beispielsweise der Z-Richtung. Beispielsweise ist das Eingriffselement in einer Kulisse des Schlittens geführt und verlässt zum Auskoppeln diese in der Auskoppelebene.

Die Ausstellmittel sind weiter derart ausgebildet, dass die Ausstellstange nach dem Entkoppeln ortsfest bezüglich der Führungsschiene verriegelt wird. Hierzu weist der Schlitten eine Verriegelungskulisse und die Ausstellstange ein weiteres Koppelelement auf. Alternativ weist die Ausstellstange die Verriegelungskulisse und der Schlitten das weitere Koppelelement auf. Das Verriegeln wird durch Zusammenspiel der Verriegelungskulisse und dem weiteren Koppelelement derart gesteuert, dass das Koppelelement der Ausstellstange in Normalenrichtung zu der Auskoppelebene in die Tasche formschlüssig eingeführt wird. Die Normalenrichtung ist beispielsweise die zur X-Z-Ebene normal verlaufende Y-Richtung des mathematischen Rechtssystems. Durch das formschlüssige Einführen wird erreicht, dass die Ausstellstange in sämtliche Richtungen, welche parallel zu der Auskoppelebene verlaufen, verriegelt ist. Somit sind die Ausstellstange und dadurch auch der hintere Ausstellhebel in seiner Position arretiert.

Durch die beschriebene Art der Verriegelung kann die Mechanik der Anordnung auch als BL-Mechanik (englisch: bottom load) verwendet werden. Dabei ist der Deckel von unten in die Dachöffnung einbaubar. Weiter werden Schaltgeräusche minimiert, da die Verriegelung mittels einer Kulisse, nämlich der Verriegelungskulisse, gesteuert wird.

Weiter ermöglicht die Anordnung somit einen Verriegelungsmechanismus, welcher nur sehr wenige Bauteile beziehungsweise Komponenten aufweist. Insbesondere sind keine filigranen Bauteile und/oder Federelemente notwendig. Zudem müssten beispielsweise keine Aussparungen in die Führungsschiene eingebracht werden, wodurch Materialkosten und Fertigungskosten eingespart werden können. Des Weiteren ist die Montage der Anordnung vereinfacht und weniger zeitintensiv. Ein weiterer Vorteil zeigt sich in der Kraftübertragung des Verriegelungsmechanismus, bei welcher abrupte Lastsprünge reduziert oder vermieden werden. Ein weiterer Vorteil zeigt sich schließlich darin, dass durch Verwendung einer Verriegelungskulisse ein Verschleiß der Anordnung sehr gering ist. Des Weiteren wird zum Verriegeln der Ausstellstange diese nicht verbogen, sondern lediglich verschoben. Dadurch wird ein Verschleiß der Ausstellstange AS gering gehalten, wobei beispielsweise ein Ermüdungsversagen der Ausstellstange AS aufgrund von Biegewechselspannungen vermieden oder zumindest reduziert wird.

Weiterhin sind die Ausstellstange und das Koppelelement der Ausstellstange starr miteinander verbunden. Beispielsweise sind das Koppelelement und die Ausstellstange einstückig hergestellt. Dadurch entsteht nur eine kurze Toleranzkette für die Verriegelung der Ausstellstange. Unter einer Toleranzkette wird das Zusammenspiel mehrerer mechanischer Komponenten verstanden unter Berücksichtigung von fertigungsbedingten Form- und/oder Lagetoleranzen. Je weniger Komponenten in der Bewegung zusammenwirken, desto weniger Toleranzen müssen kompensiert werden. Weitere Elemente, wie Federelemente oder andere, würden eine größere Toleranzkette bedingen, die berücksichtigt und kompensiert werden muss, um eine sichere Verriegelung zu gewährleisten. Aufgrund der geringen Toleranzkette werden zudem störende Geräusche wie Klappern und Schaltgeräusche vermieden.

Gemäß einer Ausgestaltung der Erfindung ist die Ausstellstange derart vorgespannt, dass eine Federkraft in der Normalenrichtung der Auskoppelebene in Richtung der Tasche wirkt. Insbesondere vor der Montage wird die Ausstellstange vorgespannt, beispielsweise bezüglich ihrer Längsachse verbogen. Dadurch besitzt die Ausstellstange einen leicht gekrümmten Verlauf. Bei der Montage der Anordnung wird die Ausstellstange entgegen ihrem ursprünglichen, verbogenen Zustand beispielsweise im Wesentlichen gerade gebogen und montiert, so dass eine Federkraft aufgrund der Vorspannung auf die Ausstellstange wirkt. Diese Federkraft sorgt dafür, dass das weitere Koppelelement in Richtung der Tasche gezwungen wird. Befindet sich das Koppelelement formschlüssig in der Tasche, so sorgt die Federkraft beziehungsweise die Vorspannung dafür, dass das Koppelelement nicht ohne weiteres aus der Tasche herausspringt. Dadurch wird gewährleistet, dass die Ausstellstange mittels des Koppelelements besonders sicher im verriegelten Zustand in der Tasche gehalten wird.

Gemäß einer weiteren Ausgestaltung der Erfindung weist ein Verlauf der Verriegelungskulisse in Fahrzeuglängsrichtung nach hinten einen vorderen Abschnitt auf, in welchem ein Abstand in der Normalenrichtung zwischen der Verriegelungskulisse und der Tasche gleich bleibt, einen mittleren Abschnitt auf, in welchem sich der Abstand in der Normalenrichtung zwischen der Verriegelungskulisse und der Tasche verändert, und einen hinteren Abschnitt auf, in welchem der Abstand in der Normalenrichtung zwischen der Verriegelungskulisse und der Tasche gleich bleibt. Bevorzugt vergrößert sich der Abstand in dem mittleren Abschnitt in Fahrzeuglängsrichtung nach hinten. Unter der Abstandsveränderung wird dabei eine wesentliche Änderung des Abstands verstanden, wobei der Verlauf insbesondere kurven-, rampen- und/oder stufenförmig verläuft. Unter dem Gleichbleiben des Abstands wird dabei verstanden, dass sich der Abstand gar nicht oder nur in sehr geringem Maße, beispielsweise unter kleinem Winkel bezüglich der Fahrzeuglängsrichtung, verändert.

Durch einen derartigen Verlauf der Verriegelungskulisse ist es möglich, dass bei Verschieben des Schlittens die Ausstellstange über das weitere Koppelelement derart in Normalrichtung zu der Auskoppelebene verschoben wird, dass das Einführen des Koppelelements der Ausstellstange in die Tasche gesteuert wird.

Gemäß einer weiteren Ausgestaltung befindet sich das weitere Koppelelement in Lüfterstellung des Deckels in dem hinteren Abschnitt und nach dem Einführen in die Tasche in dem vorderen Abschnitt der Verriegelungskulisse.

Gemäß einer weiteren Ausgestaltung der Erfindung ist die Ausstellstange in Schließstellung des Deckels über das Koppelelement mit einer bezüglich der Führungsschiene ortsfesten Kulisse gekoppelt. Mittels der ortsfesten Kulisse ist das Auskoppeln in der Auskoppelebene der Ausstellstange von dem Schlitten steuerbar.

Bevorzugt ist die Tasche in der Normalenrichtung im Bereich dieser ortsfesten Kulisse ausgebildet. Dadurch ist es möglich, dass zum Auskoppeln und zum Verriegeln ein und dasselbe Koppelelement der Ausstellstange verwendet wird. Dadurch kann insgesamt Bauraum eingespart werden. Des Weiteren könnten Materialkosten und Herstellungskosten reduziert werden.

Gemäß einer weiteren Ausgestaltung der Erfindung wird die Auskoppelebene von der Fahrzeuglängsrichtung und einer dazu senkrechten Vertikalrichtung aufgespannt. In Einklang mit den eingangs beschriebenen Definitionen der Richtungen ist in diesem Fall die Normalenrichtung parallel zu einer Y-Richtung, welche jeweils senkrecht zu den beschriebenen Richtungen X und Z eines Rechtssystems verläuft. Dies bedeutet, dass die Ausstellstange in der Auskoppelebene, welche von der Z-Richtung und der X-Richtung aufgespannt wird, auskoppelt und normal zu dieser Auskoppelebene in Y-Richtung in der Tasche formschlüssig verriegelt wird.

Weitere Ausgestaltungen sind in den Unteransprüchen sowie in der nachfolgenden, ausführlichen Beschreibung eines Ausführungsbeispiels unter Zuhilfenahme der angehängten Figuren beschrieben.

Elemente oder Merkmale gleicher Konstruktion oder Funktion sind figurenübergreifend mit den gleichen Bezugszeichen versehen. Bereits mit Hilfe von Bezugszeichen beschriebene Elemente oder Merkmale sind nicht zwingend in allen Figuren mit Bezugszeichen versehen.

In den Figuren zeigen:
- Figur 1: eine schematische perspektivische Ansicht eines Fahrzeugs,
- Figur 2: eine schematische Seitenansicht einer Anordnung mit einem Deckel für ein Fahrzeugdach des Fahrzeugs,
- Figuren 3A und 3B: schematische, vergrößerte Seitenteilschnittansichten der Anordnung in einer Schließstellung,
- Figuren 4A und 4B: zwei erste schematische, vergrößerte Seitenteilschnittansichten der Anordnung in einer Lüfterstellung,
- Figuren 5A und 5B: zwei schematische, vergrößerte Seitenteilschnittansichten der Anordnung in der Lüfterstellung,
- Figuren 6 und 7: zwei perspektivische Ansichten der Anordnung in einem vorderen Bereich in der Lüfterstellung,
- Figur 8: eine perspektivische Ansicht einer Ausstellstange von einer Unterseite,
- Figuren 9 bis 11: perspektivische Ansichten der Anordnung in dem vorderen Bereich der Ausstellstange in der Lüfterstellung,
- Figur 12: eine perspektivische Ansicht der Anordnung vor einem Verriegeln der Ausstellstange in einer Tasche und
- Figur 13: eine perspektivische Darstellung der Anordnung nach Verriegeln der Ausstellstange in der Tasche.

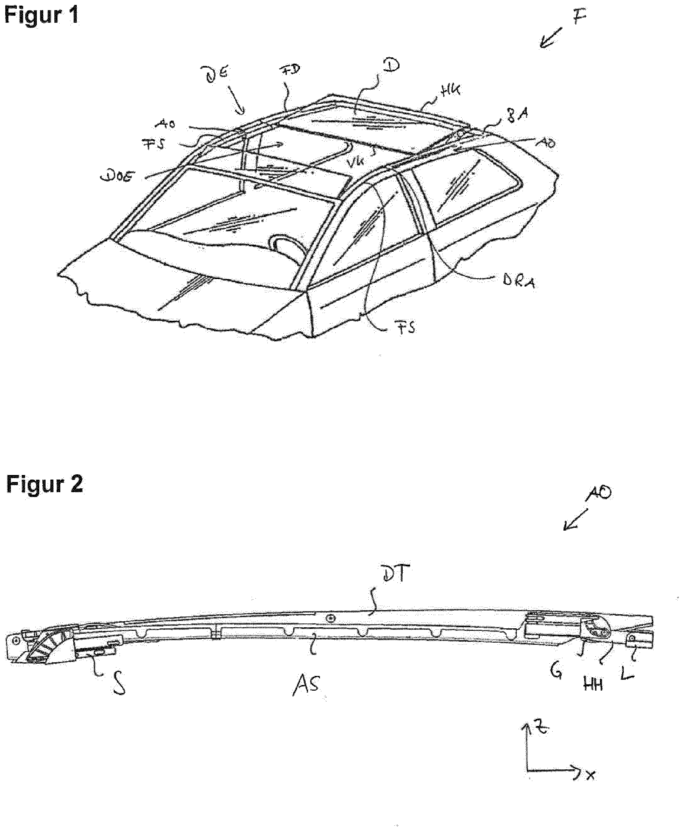

Figur 1 zeigt eine schematische, perspektivische Ansicht eines Fahrzeugs F mit einem Fahrzeugdach FD. Das Fahrzeugdach FD weist einen fahrzeugfesten Befestigungsabschnitt BA auf, der als Dachschale ausgebildet ist. Der fahrzeugfeste Befestigungsabschnitt BA ist mit einer Dachöffnung DOE versehen, die mittels eines verstellbaren, beweglichen Dachelements DE wahlweise verschlossen oder zumindest teilweise freigebbar ist.

Die Dachöffnung DOE wird von einem an dem Fahrzeugdach FD ausgebildeten Dachrahmenabschnitt DRA begrenzt. Der Dachrahmenabschnitt DRA hat vorzugsweise beidseitig angeordnete Führungsschienen FS.

Das Dachelement DE hat einen Deckel D und ist relativ verschiebbar bezüglich der Führungsschienen FS im Bereich des Befestigungsabschnitts BA gelagert. Dabei ist das Dachelement DE über einen Deckelträger und Anordnungen AO in den Führungsschienen FS verschiebbar gelagert. Der Deckel D ist vorzugsweise als Glasdeckel ausgebildet.

Die im Bereich der Führungsschienen FS angeordneten Anordnungen AO dienen dem Zweck, den Deckel D, der die Dachöffnung DOE des Fahrzeugdachs FD verschließt, aus einer Schließstellung in eine Offenstellung zu verschieben, um so die Dachöffnung DOE des Fahrzeugdachs FD freizugeben. Hierzu weisen die Anordnungen AO die Ausstellmittel auf. Zum Öffnen wird der Deckel D in einem hinteren Bereich angehoben und über einen hinteren Teil des Fahrzeugdachs FD geschoben. Dazu ist es erforderlich, dass der Deckel D angehoben wird, da er in Schließstellung bündig mit der Oberseite des Fahrzeugdachs FD abschließt. Bei einem typischen Bewegungsablauf wird zunächst eine hintere Kante HK des Deckels D ausgestellt. Diese Zwischenposition wird auch als eine Lüfterstellung bezeichnet. Im weiteren Verlauf der Öffnungsbewegung wird der Deckel D in Fahrzeuglängsrichtung nach hinten in die Offenstellung verschoben.

Dieser typische Bewegungsablauf wird mit Hilfe der Anordnungen AO bewerkstelligt, welche anhand der folgenden Figuren 2 bis 13 genauer beschrieben werden. Dabei ist in diesen Figuren 2 bis 13 jeweils nur eine Anordnung AO auf einer Seite mit der zugehörigen Mechanik dargestellt. Alle Teile sind jedoch spiegelbildlich zu einer Mittellängsebene des Fahrzeugs F auf beiden Seiten der Dachöffnung DOE angeordnet. Die Anordnung AO kann auch als Ausstellvorrichtung bezeichnet werden. Es gilt zu beachten, dass in den Figuren 2 bis 13 lediglich ein Deckelträger DT dargestellt ist, welcher mit dem Deckel D mechanisch fest gekoppelt ist. Somit ist der Deckel D mit den Ausstellmitteln direkt gekoppelt und mit Hilfe dieser bewegbar. Ein Verschieben des Deckels D ist demnach gleichbedeutend mit einem Verschieben des Deckelträgers DT.

Weiter ist in den Figuren 2 bis 13 jeweils ein Koordinatensystem dargestellt, welches die Richtungen X und Z bzw. X, Y und Z zeigt. Das Koordinatensystem entspricht dem mathematischen Rechtssystem. Die X-Richtung kann dabei auch als Fahrzeuglängsrichtung oder Horizontalrichtung bezeichnet werden. Die Z-Richtung kann auch als Vertikalrichtung bezeichnet werden.

Figur 2 zeigt eine schematische Seitenansicht einer Anordnung AO. Die Ausstellmittel der Anordnung AO umfassen einen Schlitten S, der in Fahrzeuglängsrichtung mittels eines Antriebs in einer Führungsschiene FS verschiebbar ist. Weiter umfassen die Ausstellmittel eine Ausstellstange AS, ein ortsfestes Lager L sowie einen hinteren Ausstellhebel HH. Der hintere Ausstellhebel HH ist schwenkbar mit einem Gleiter G verbunden, welcher verschiebbar an dem Deckelträger DT gekoppelt ist. In Figur 2 ist die Schließstellung des Deckels D dargestellt.

Wird ausgehend von der Schließstellung des Deckels D der Schlitten S verschoben, so wird die Ausstellstange AS ebenfalls parallel zur Fahrzeuglängsrichtung nach hinten verschoben, da die Ausstellstange AS mit dem Schlitten S zunächst mechanisch gekoppelt ist. Dabei wird der hintere Ausstellhebel HH bezüglich des Lagers L verschwenkt, so dass der Deckelträger DT beziehungsweise der Deckel D im Bereich der hinteren Kante HK ausgestellt beziehungsweise angehoben wird. In diesem ausgestellten Zustand befindet sich der Deckel D in der Lüfterstellung. Wird der Schlitten S weiter nach hinten verschoben, wird der Schlitten S von der Ausstellstange AS entkoppelt. Dies bedeutet, dass die Ausstellstange AS nicht mehr in X-Richtung in dem Schlitten S verriegelt ist. Gleichzeitig wird die Ausstellstange AS im Bereich ihres vorderen Endes durch einen Verriegelungsmechanismus ortsfest bezüglich der Führungsschiene FS festgelegt. Dies bedeutet, dass der hintere Ausstellhebel HH ebenfalls arretiert in der ausgestellten Position gehalten ist. Bei einem weiteren Verschieben des Schlittens S nimmt dieser den Deckelträger DT mit und schiebt den Deckelträger DT und somit den Deckel D über das Fahrzeugdach FD in die Offenstellung. Dies ist wie beschrieben dadurch möglich, dass der hintere Ausstellhebel HH verschiebbar über den Gleiter G mit dem Deckelträger G gekoppelt ist.

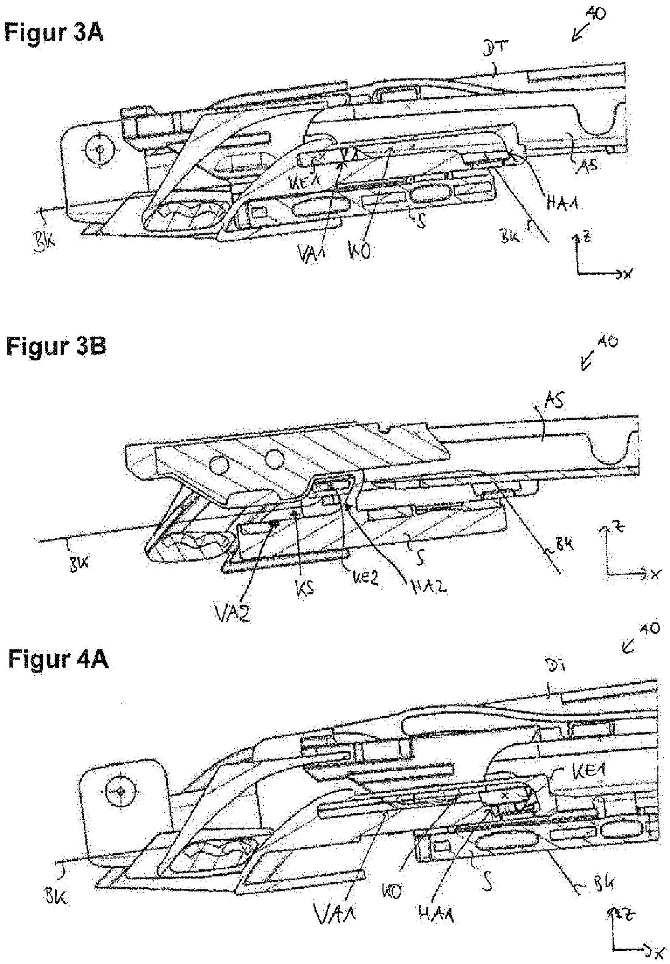

In den folgenden Figuren 3A bis 5B wird detailliert auf die Ausstellmittel der Anordnung AO im vorderen Bereich des Deckels D eingegangen. Insbesondere wird ein Entkoppeln der Ausstellstange AS von dem Schlitten S erläutert. Das Entkoppeln bedeutet in diesem Zusammenhang, dass der Schlitten S die Ausstellstange AS nicht mehr in X-Richtung nach hinten mitnimmt. In weiteren, nicht gezeigten Ausführungsbeispielen sind die Ausstellmittel anders ausgebildet, um das Entkoppeln der Ausstellstange AS von dem Schlitten S zu bewerkstelligen. Insbesondere können andere Elemente wie Hebel oder dergleichen vorgesehen sein. Entscheidend ist lediglich, dass die Entkopplung stattfindet.

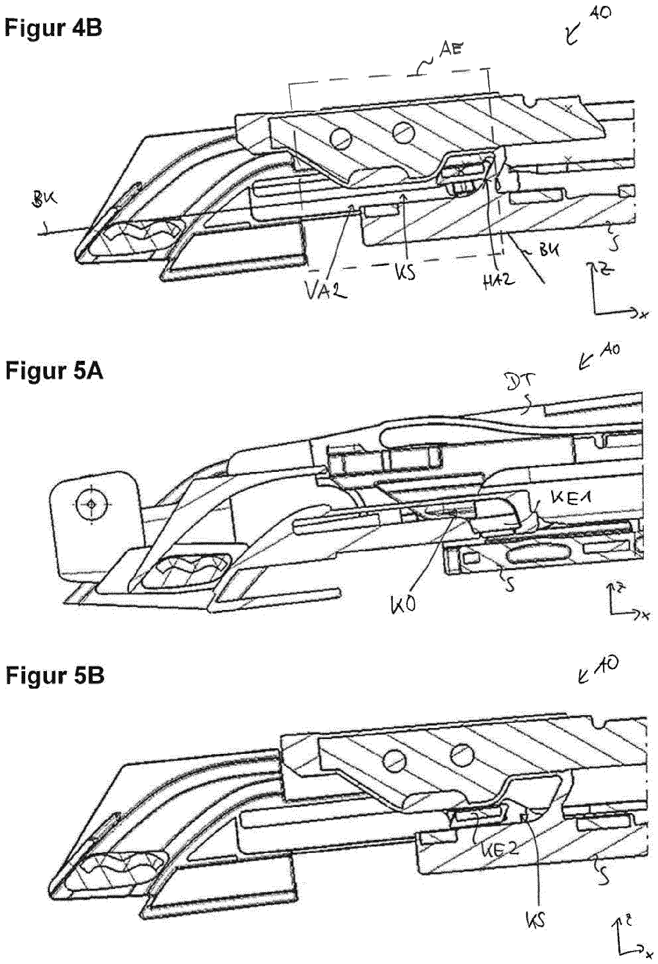

Die Figuren 3A bis 5B sind in Figurenpaare unterteilt, welche durch die Suffixe "A" und "B" gekennzeichnet sind. Ein Figurenpaar, beispielsweise 3A und 3B, zeigt dabei die Anordnung AO in einem bestimmten Zustand des beschriebenen Bewegungsablaufs, wobei zwei unterschiedliche jeweils teilweise geschnittene Seitenansichten der Anordnung AO zu einem gleichen Zeitpunkt schematisch dargestellt sind. Die Figuren 3A und 3B zeigen die Anordnung AO in der Schließstellung des Deckels D. Die Figuren 4A und 4B zeigen die Anordnung AO in der Lüfterstellung. Die Figuren 5A und 5B zeigen die Anordnung AO in einem weiteren Zustand, wobei sich der Deckel D weiter in der Lüfterstellung befindet. Die jeweiligen zwei teilweise geschnittenen Seitenansichten eines Figurenpaars verlaufen dabei durch zwei unterschiedliche Ebenen parallel zu der Bildebene der Figuren, wobei in den mit dem Suffix "A" bezeichneten Figuren der Fokus auf eine ortsfeste Kulisse KO des Fahrzeugs F und in den mit dem Suffix "B" bezeichneten Figuren auf eine Schlittenkulisse KS des Schlittens S gelegt wird. Allen Figuren 3A bis 5B ist gemein, dass sie ein vorderes Ende der Ausstellstange AS im Bereich einer vorderen Kante VK des Deckels D darstellen (s. Figur 1).

Wie bereits erwähnt weist die Anordnung AO einen Schlitten S auf. Der Schlitten S weist eine Schlittenkulisse KS auf. Die Anordnung AO weist des Weiteren eine ortsfeste Kulisse KO auf. Die ortsfeste Kulisse KO ist dabei bezüglich der Führungsschiene FS ortsfest. Die Ausstellstange AS weist ein erstes Koppelelement KE1 und ein zweites Koppelelement KE2 auf, welche auf gegenüberliegenden Seiten der Ausstellstange AS angeordnet sind. Die beiden Koppelemente KE1 und KE2 sind als Gleitelemente ausgebildet.

Mittels des ersten Koppelelements KE1 ist die Ausstellstange AS in Schließstellung des Deckels D in der ortsfesten Kulisse KO geführt. Die ortsfeste Kulisse KO weist einen vorderen Abschnitt VA1 und einen hinteren Abschnitt HA1 auf. Der vordere Abschnitt VA1 weist einen Verlauf auf, bei welchem sich in Schließstellung des Deckels D ein Abstand zwischen der ortsfesten Kulisse KO und dem Deckel D im Wesentlichen nicht verändert. Der hintere Abschnitt HA1 der ortfesten Kulisse KO weist einen Verlauf auf, bei welchem sich der Abstand zwischen dem Deckel D und der ortsfesten Kulisse KO in Fahrzeuglängsrichtung nach hinten vergrößert.

Mittels des zweiten Koppelelements KE2 ist die Ausstellstange AS in Schließstellung des Deckels D in der Schlittenkulisse KS geführt. Die Schlittenkulisse KS weist einen Verlauf auf, bei welchem in Schließstellung des Deckels D in einem vorderen Abschnitt VA2 der Abstand zwischen dem Deckel und der Schlittenkulisse KS sich nicht verändert beziehungsweise gleich bleibt. In einem hinteren Abschnitt HA2 der Schlittenkulisse KS weist die Schlittenkulisse KS einen Verlauf auf, bei welchem sich der Abstand zwischen dem Deckel und der Schlittenkulisse KS verringert.

Der Abstand zwischen dem Deckel D und der jeweiligen Kulisse KS bzw. KO ist dabei auf eine Bahnkurve BK der jeweiligen Kulisse KS bzw. KO bezogen, wie sie beispielsweise in Figur 3B angedeutet sind. Die Bahnkurven BK sind dabei schematisch zu verstehen und geben nur bedingt Aufschluss über eine tatsächliche Länge bzw. Ausgestaltung der Kulissen KS bzw. KO.

In Schließstellung des Deckels D befindet sich das erste Koppelelement KE1 in dem vorderen Abschnitt VA1 der ortsfesten Kulisse KO (s. Figur 3A). Das zweite Koppelelement KE2 der Ausstellstange AS befindet sich in dem hinteren Abschnitt HA2 der Schlittenkulisse KS (s. Figur 3B). Somit ist die Ausstellstange AS mittels der ortsfesten Kulisse KO und dem ersten Koppelelement KE1 in Z-Richtung verriegelt beziehungsweise geführt. Dagegen ist eine Bewegung der Ausstellstange AS bezüglich der ortsfesten Kulisse KO in Fahrzeuglängsrichtung beziehungsweise X-Richtung freigegeben. Umgekehrt verhält es sich mit der Schlittenkulisse KS des Schlittens S, wobei die Ausstellstange AS mittels des zweiten Koppelelements KE2 in X-Richtung verriegelt ist, während eine Z-Bewegung freigegeben ist.

Wird nun der Schlitten S in Fahrzeuglängsrichtung nach hinten verschoben, so nimmt dieser die Ausstellstange AS in Fahrzeuglängsrichtung nach hinten mit. Dies liegt daran, dass die Ausstellstange mittels des zweiten Koppelelements KE2 in der Schlittenkulisse KS in X-Richtung verriegelt ist, während eine Bewegung der Ausstellstange AS parallel zu der Fahrzeuglängsrichtung mittels der ortsfesten Kulisse KO freigegeben ist.

Wird der Schlitten S weiter nach hinten verschoben, so wird der in den Figuren 4A und 4B gezeigte Zustand der Anordnung AO erreicht. Aufgrund des im hinteren Bereichs beziehungsweise in den hinteren Abschnitten HA1 und HA2 der ortsfesten Kulisse KO beziehungsweise Schlittenkulisse KS gegenläufigen Verläufe kommt es zu einer so genannten Übergabe der beiden Koppelelemente KE1 und KE2, wobei die beiden Kulissen KO und KS ihre Verriegelungsrichtungen vertauschen. Dabei wird aufgrund der Führung der ortsfesten Kulisse KO in Z-Richtung das erste Koppelelement KE1 in den hinteren Abschnitt HA2 der ortsfesten Kulisse KO geführt, während das zweite Koppelelement KE2 aus dem hinteren Abschnitt HA2 der Schlittenkulisse KS in den vorderen Abschnitt VA2 der Schlittenkulisse KS bewegt wird. Der Deckel D befindet sich somit zumindest teilweise in der Lüfterstellung.

Wird der Schlitten S nun weiter verschoben kommt es zu dem in Figur 5A und 5B gezeigten Zustand, wobei sich das erste Koppelelement KE1 nun vollständig in dem hinteren Abschnitt HA1 der ortsfesten Kulisse KO befindet. Somit ist die Ausstellstange AS mittels des ersten Koppelelements KE1 in der ortsfesten Kulisse KO in X-Richtung zunächst verriegelt. Gleichzeitig ist mittels der Schlittenkulisse KS eine Bewegung in X-Richtung freigegeben. In Z-Richtung ist die Ausstellstange AS über das zweite Koppelelement KE2 nun in der Schlittenkulisse KS geführt. Der Deckel D befindet sich in der Lüfterstellung.

Bei dem beschriebenen Bewegungsablauf anhand der Figuren 3A bis 5B wurde die Ausstellstange AS von dem Schlitten S entkoppelt. Diese Entkopplung findet im Wesentlichen in einer Auskoppelebene AE statt, wie exemplarisch in Figur 4B gezeigt. Die Auskoppelebene AE wird von der X-Richtung und der Z-Richtung aufgespannt. Bei der Entkopplung der Ausstellstange AS wird diese nicht verbogen oder gekrümmt, sondern lediglich in der Auskoppelebene AE verschoben.

Würde ausgehend von dem in Figuren 5A und 5B dargestellten Zustand der Schlitten S weiter nach hinten in Fahrzeuglängsrichtung verschoben werden, so würde die Ausstellstange AS die Schlittenkulisse KS möglicherweise verlassen. Dadurch wäre die Ausstellstange AS nicht nur von dem Schlitten S entkoppelt, sondern zusätzlich auch nicht mehr in Z-Richtung durch die Schlittenkulisse KS geführt. Dadurch ist es unter Umständen möglich, dass die Verriegelung der Ausstellstange AS in X-Richtung durch Anheben des Deckels D, beispielsweise aufgrund von unberechtigter Fremdeinwirkung, aufgehoben wird.

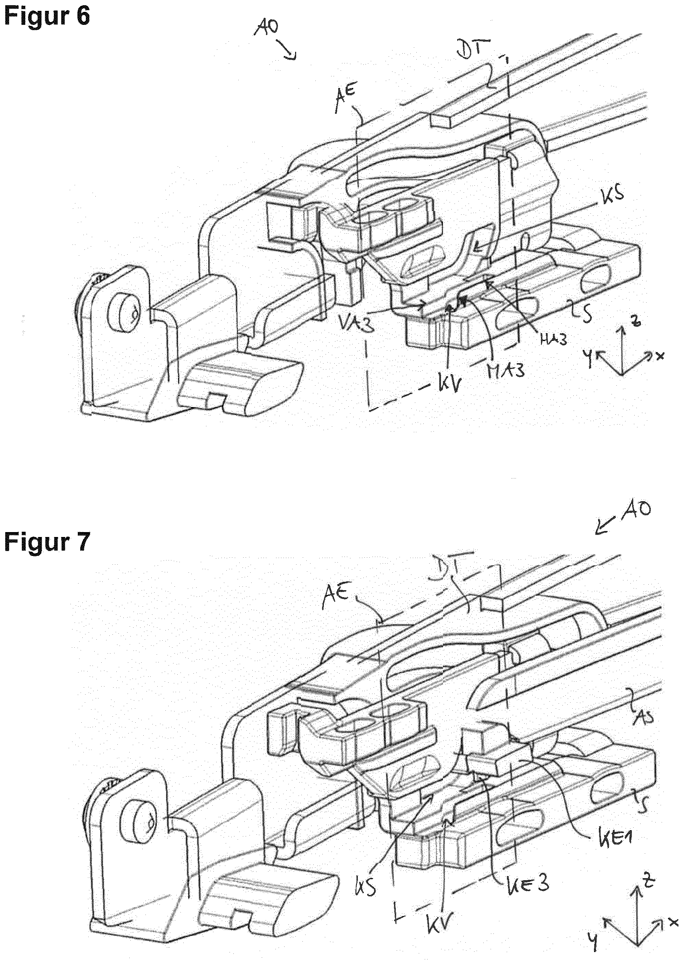

Um die Verriegelung in X-Richtung sicher zu gewährleisten, wird die Ausstellstange AS zusätzlich zu der anhand von Figuren 3A bis 5B beschriebenen Verriegelung in Normalenrichtung zu der Auskoppelebene verriegelt. Dies ist anhand der Figuren 6 bis 13 beschrieben. Es sei an dieser Stelle darauf hingewiesen, dass die anhand der Figuren 3A bis 5B beschriebene Entkopplung der Ausstellstange AS von dem Schlitten S auch anderweitig, beispielsweise mittels Hebel und/oder Federelementen, erfolgen kann. Entscheidend für die nachfolgend beschriebene Verriegelung ist, dass die Ausstellstange AS von dem Schlitten S in der Auskoppelebene AE entkoppelt ist.

Figur 6 zeigt eine perspektivische Ansicht der Anordnung AO, in welcher aus Gründen der Übersichtlichkeit auf die Ausstellstange AS verzichtet ist. Dabei ist ein vorderer Bereich der Anordnung AO gezeigt. Weiter zu erkennen ist die Schlittenkulisse KS des Schlittens S. Der Deckel D befindet sich momentan in der Lüfterstellung. Zusätzlich ist das Koordinatensystem vollständig zu erkennen, insbesondere inklusive der Y-Richtung.

Neben der Schlittenkulisse KS weist der Schlitten S des Weiteren eine Verriegelungskulisse KV auf, welche in einem Teil des Schlittens S ausgebildet ist. Wie später beschrieben wird, dient die Verriegelungskulisse KV der zusätzlichen Verriegelung der Ausstellstange AS in Y-Richtung. In Schließstellung des Deckels D weist die Verriegelungskulisse KV einen Verlauf mit wenigstens drei Abschnitten auf. Dabei gliedert sich der Verlauf in Fahrzeuglängsrichtung nach hinten in einen vorderen Abschnitt VA3, einen mittleren Abschnitt MA3 und einen hinteren Abschnitt HA3. Der vordere Abschnitt VA3 der Verriegelungskulisse KV ist dabei derart ausgebildet, dass sich ein Abstand zwischen der Verriegelungskulisse KV und der Auskoppelebene AE nicht verändert, also im Wesentlichen gleich bleibt. Das heißt mit anderen Worten ausgedrückt, dass sich der Verlauf in Y-Richtung nicht verändert. Im mittleren Abschnitt MA3 der Verriegelungskulisse KV verändert sich der Abschnitt der Verriegelungskulisse KV, während er in dem hinteren Abschnitt HA3 wiederum gleich bleibt. Im mittleren Abschnitt MA3 der Verriegelungskulisse KV ändert sich der Abstand derart, dass sich dieser in Fahrzeuglängsrichtung nach hinten in der Normalenrichtung zu der Auskoppelebene AE in positiver Y-Richtung vergrößert.

In Figur 7 ist zusätzlich zu der Ansicht in Figur 6 die Ausstellstange AS dargestellt. Dabei ist das erste Koppelelement KE1 ersichtlich, mit welchem die Ausstellstange AS in der ortsfesten Kulisse KO geführt ist. Des Weiteren weist die Ausstellstange AS an einer Unterseite ein weiteres Koppelelement KE3 auf. Das weitere Koppelelement KE3 wird zum Verriegeln der Ausstellstange AS in der Y-Richtung in der Verriegelungskulisse KV geführt. In dem in Figur 7 gezeigten Zustand der Anordnung befindet sich das weitere Koppelelement KE3 der Ausstellstange AS nicht in Eingriff mit der Verriegelungskulisse KV. Dabei ist die Ausstellstange AS noch nicht von dem Schlitten S entkoppelt und wird von diesem in X-Richtung mitgenommen.

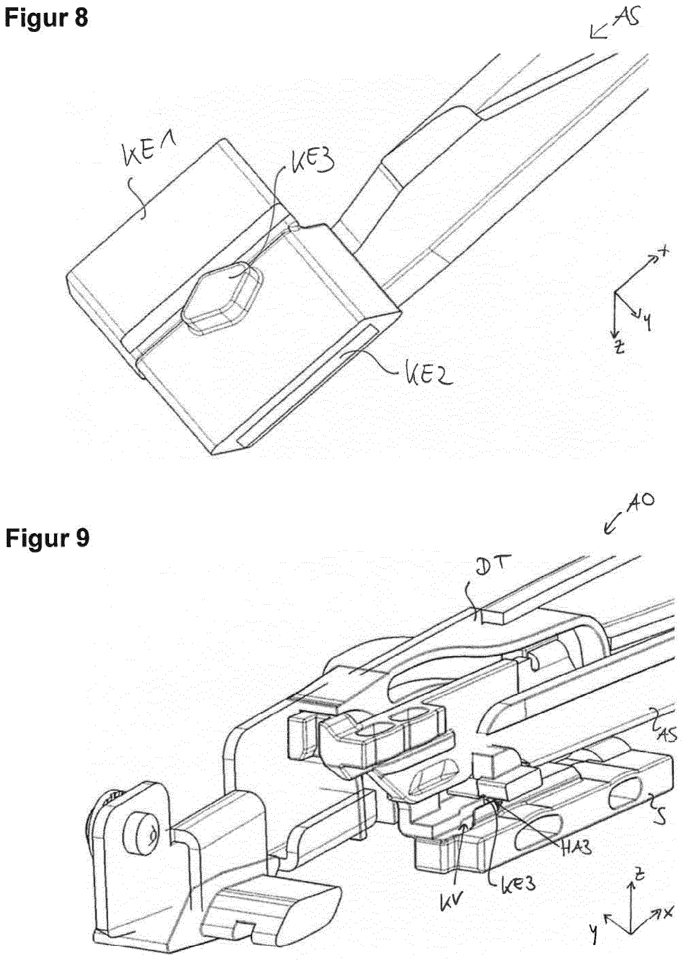

Das weitere Koppelelement KE3 ist nochmals deutlich in Figur 8 dargestellt, wobei die Ausstellstange AS von einer Unterseite perspektivisch gezeigt ist.

Wird der Schlitten S ausgehend von dem in Figur 7 gezeigten Zustand verschoben, so koppelt die Ausstellstange AS wie anhand der Figuren 3A bis 5B beschrieben von dem Schlitten S ab, wobei das zweite Koppelelement KE2 in den vorderen Abschnitt VA2 der Schlittenkulisse KS geführt wird. Dabei wird die Ausstellstange AS wie beschrieben in vertikaler Richtung nach unten gezwungen. Dabei taucht, wie in Figur 9 zu sehen, das weitere Koppelelement KE3 der Ausstellstange AS in die Verriegelungskulisse KV ein. Das weitere Koppelelement KE3 befindet sich nunmehr in dem hinteren Abschnitt HA3 der Verriegelungskulisse KV.

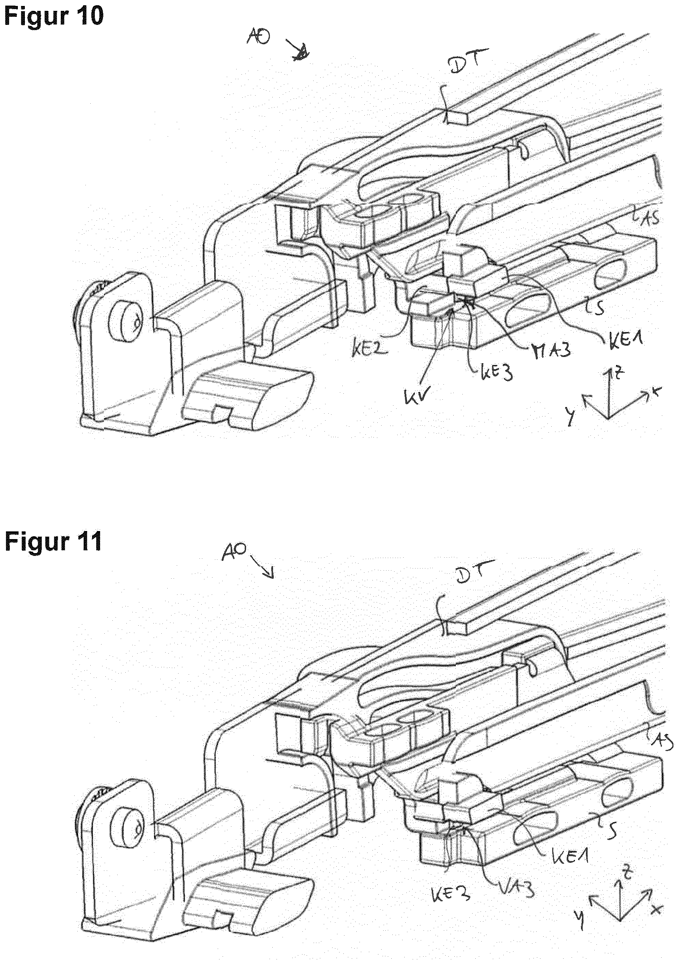

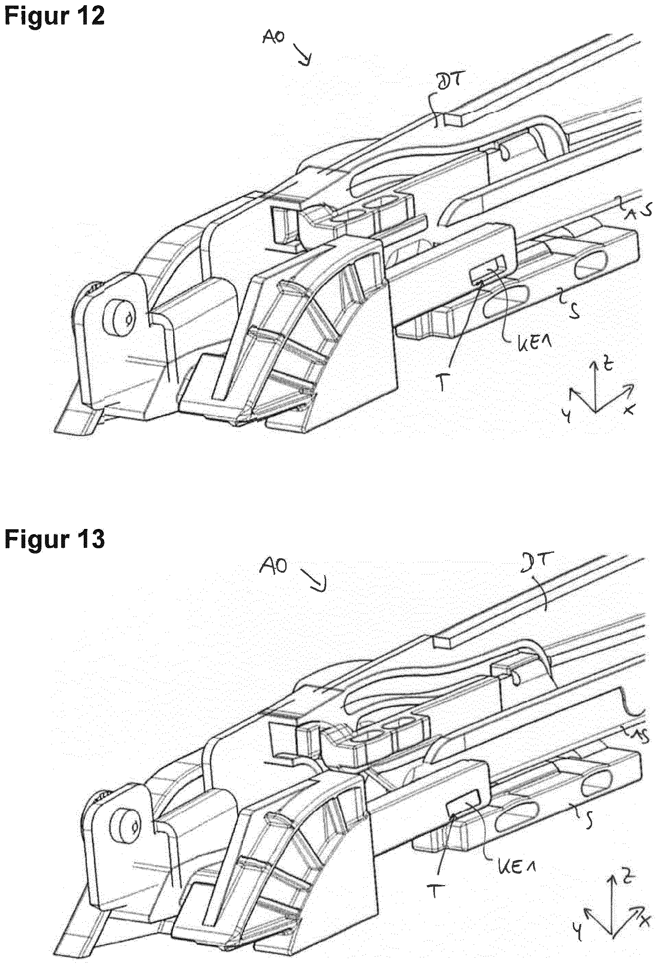

Wird der Schlitten S weiter in Fahrzeuglängsrichtung nach hinten verschoben, so wird das weitere Koppelelement KE3 der Ausstellstange AS in den vorderen Abschnitt VA3 der Verriegelungskulisse KV geführt. Während dieser Bewegung wird die Ausstellstange AS in Y-Richtung verschoben. Dies ist in den Figuren 10 und 11 dargestellt. Die Ausstellstange AS ist dabei aufgrund der X-Verriegelung mittels des ersten Koppelelements KE1 in der ortsfesten Kulisse KO positionsfest bezüglich der Führungsschiene FS. Mittels der Verriegelungskulisse KV wird also gesteuert, dass das erste Koppelelement KE1 eine Bewegung in Y-Richtung vollzieht. Dabei taucht das erste Koppelelement KE1 in eine bezüglich der Führungsschiene FS ortsfeste Tasche T, wie in den Figuren 12 und 13 gezeigt, ein. Dabei ist die Tasche T in ihrer Formgestaltung an das erste Koppelelement KE1 angepasst. In anderen Worten, ist eine Außenkontur des ersten Koppelelements KE1 an eine Innenkontur der Tasche T angepasst. Die Tasche T entspricht somit einer Negativ-Form des ersten Koppelelements KE1.

Durch das Einführen des ersten Koppelelements KE1 in die Tasche T ist die Ausstellstange AS in sämtlichen Richtungen parallel zu der Auskoppelebene AE verriegelt. Insbesondere ist die Ausstellstange AS in Z-Richtung und in X-Richtung verriegelt. Somit ist es nicht möglich, die Ausstellstange AS ohne weiteres aus ihrer verriegelten Position zu bewegen.

Optional kann die Ausstellstange AS auch vorgespannt sein. Dazu ist die Ausstellstange AS bezüglich der Fahrzeuglängsrichtung, also im Ausführungsbeispiel in X-Richtung in der X-Y-Ebene, leicht gebogen. Bei der Montage wird die Ausstellstange AS wie in den Figuren 2 bis 13 gezeigt gerade gebogen montiert und eingesetzt. Aufgrund der Vorspannung versucht die Ausstellstange AS sich in ihre ursprüngliche gebogene Form zurückzubiegen, so dass eine Federkraft insbesondere in Y-Richtung wirkt. Die Federkraft wirkt somit in Richtung der Tasche T. dies hat den Vorteil, dass nach dem Einführen des weiteren Koppelelements KE3 in die Tasche T das weitere Koppelelement KE3 in der Tasche T aufgrund der Federkraft durch die Vorspannung der Ausstellstange AS gehalten wird. Dies gewährleistet eine besonders sichere Führung und Verriegelung der Ausstellstange AS.

Wird der Schlitten S entgegen der Fahrzeuglängsrichtung wieder zurückgeschoben, so wird zunächst das weitere Koppelelement KE3 aus der Tasche T herausgeführt und anschließend der beschriebene Bewegungsablauf anhand der Figuren 3A bis 5B in umgekehrter Reihenfolge durchlaufen.

Im Ausführungsbeispiel ist die Ausstellstange AS über das erste Koppelelement KE1 in der ortsfesten Kulisse KO geführt und wird anschließend über das erste Koppelelement KE1 in der Tasche T verriegelt. Alternativ kann auch ein weiteres Koppelelement vorgesehen sein, welches anstelle des ersten Koppelelements KE1 in der Tasche T verriegelt wird. Alternativ zu dem Ausführungsbeispiel kann die Ausstellstange AS auch in einer anderen Auskoppelebene von dem Schlitten S entkoppeln. Ein solche Auskoppelebene könnte beispielsweise durch die X- und die Y-Richtung aufgespannt sein. Demzufolge muss die Tasche zum Verriegeln derart angeordnet sein, dass das entsprechende Koppelelement in Z-Richtung, also normal zu der Auskoppelebene, in die Tasche geführt werden kann.

Sämtliche dargestellte Teile und Elemente können in ihrer expliziten Formgebung abgeändert und/oder variiert sein, wobei das grundlegende, hier erläuterte mechanische und kinematische Wirkprinzip der Anordnung AO erhalten bleiben soll.

### Bezugszeichenliste

- AO: Anordnung
- AE: Auskoppelebene
- AS: Ausstellstange
- BA: Befestigungsabschnitt
- BK: Bahnkurve
- D: Deckel
- DE: Deckelelement
- DOE: Dachöffnung
- DRA: Dachrahmenabschnitt
- DT: Deckelträger
- F: Fahrzeug
- FD: Fahrzeugdach
- FS: Führungsschiene
- G: Gleiter
- HA1, HA2, HA3: hinterer Abschnitt
- HA: hinterer Ausstellhebel
- HK: hintere Kante
- KE1, KE2, KE3: Koppelelement
- KO: ortsfeste Kulisse
- KS: Schlittenkulisse
- KV: Verriegelungskulisse
- L: Lager
- MA3: mittlerer Abschnitt
- S: Schlitten
- T: Tasche
- VA1, VA2, VA3: vorderer Abschnitt
- VK: vordere Kante

## Patentansprüche

1. Anordnung (AO) mit einem Deckel (D) für ein Fahrzeugdach (FD), der ausgehend von einer Schließstellung zum Verschließen einer Dachöffnung (DOE) zum Öffnen durch Ausstellmittel in seinem hinteren Bereich anhebbar und nach hinten über das Fahrzeugdach (FD) in eine Offenstellung verschiebbar ist, wobei die Ausstellmittel
- einen in Fahrzeuglängsrichtung mittels eines Antriebs in einer Führungsschiene (FS) verschiebbaren Schlitten (S) aufweisen;
- eine mittels des Schlittens (S) in Fahrzeuglängsrichtung verschiebbare Ausstellstange (AS) mit einem Koppelelement (KE1) aufweisen, wobei die Ausstellstange (AS) in der Schließstellung des Deckels (D) mit dem Schlitten (S) gekoppelt ist; **gekennzeichnet durch**
- eine bezüglich der Führungsschiene (FS) ortsfest ausgebildete Tasche (T), welche in ihrer Formgebung an das Koppelelement (KE1) der Ausstellstange (AS) angepasst ist; und
- ein weiteres Koppelelement (KE3) und eine Verriegelungskulisse (KV) aufweisen, wovon die Ausstellstange (AS) das Eine und der Schlitten (S) das jeweils Andere aufweist;
so dass
ausgehend von der Schließstellung des Deckels (D) bei einem Verschieben des Schlittens (S) in Fahrzeuglängsrichtung nach hinten die Ausstellstange (AS) in einer Auskoppelebene (AE) von dem Schlitten (S) entkoppelbar ist und relativ zu der Führungsschiene (FS) formschlüssig verriegelt ist, wobei zum Verriegeln das weitere Koppelelement (KE3) sowie die Verriegelungskulisse (KV) derart miteinander in Eingriff sind, dass ein Einführen des Koppelelements (KE1) der Ausstellstange (AS) im Wesentlichen in Normalenrichtung der Auskoppelebene (AE) in die Tasche (T) steuerbar ist.

2. Anordnung (AO) nach Anspruch 1, wobei der Schlitten (S) die Verriegelungskulisse (KV) aufweist und die Ausstellstange (AS) das weitere Koppelelement (KE3) aufweist.

3. Anordnung (AO) nach Anspruch 1, wobei der Schlitten (S) das weitere Koppelelement (KE3) aufweist und die Ausstellstange (AS) die Verriegelungskulisse (KV) aufweist.

4. Anordnung (AO) nach einem der vorhergehenden Ansprüche, wobei die Ausstellstange (AS) derart vorgespannt ist, dass eine Federkraft in der Normalenrichtung der Auskoppelebene (AE) in Richtung der Tasche (T) wirkt.

5. Anordnung (AO) nach einem der vorhergehenden Ansprüche, wobei ein Verlauf der Verriegelungskulisse (KV) in Fahrzeuglängsrichtung nach hinten einen vorderen Abschnitt (VA), in welchem ein Abstand in der Normalenrichtung zwischen der Verriegelungskulisse (KV) und der Tasche (T) gleich bleibt, einen mittleren Abschnitt (MA), in welchem sich der Abstand in der Normalenrichtung zwischen der Verriegelungskulisse (KV) und der Tasche (T) verändert, und einen hinteren Abschnitt (HA) aufweist, in welchem der Abstand in der Normalenrichtung zwischen der Verriegelungskulisse (KV) und der Tasche (T) gleich bleibt.

6. Anordnung (AO) nach Anspruch 5, wobei sich der Abstand in dem mittleren Abschnitt (MA) in Fahrzeuglängsrichtung nach hinten vergrößert.

7. Anordnung (AO) nach einem der vorhergehenden Ansprüche, wobei die Ausstellstange (AS) in Schließstellung des Deckels (D) über das Koppelelement (KE1) mit dem Schlitten (S) gekoppelt ist.

8. Anordnung (AO) nach einem der vorhergehenden Ansprüche, wobei die Auskoppelebene (AE) von der Fahrzeuglängsrichtung und einer dazu senkrechten Vertikalrichtung aufgespannt wird.

9. Anordnung (AO) nach einem der vorhergehenden Ansprüche, wobei die Koppelelemente (KE1, KE2) als Gleitelemente, insbesondere Drehgleiter, ausgebildet sind.

## Claims

1. Arrangement (AO) having a cover (D) for a vehicle roof (FD) which, starting from a closed position for closing a roof opening (DOE), is raisable for opening using deployment means in the rear region thereof and which is displaceable toward the rear over the vehicle roof (FD) to an open position, wherein the deployment means
- have a sliding member (S) which is displaceable in a guide rail (FS) in the longitudinal direction of the vehicle by means of a drive;
- have a deployment rod (AS), having a coupling element (KE1), which is displaceable in the longitudinal direction of the vehicle by means of the sliding member (S), wherein the deployment rod (AS) in the closed position of the cover (D) is coupled to the sliding member (S);
- **characterized by** a pocket (T) which, in relation to the guide rail (FS), is configured so as to be locationally fixed and which in terms of the shaping thereof is adapted to the coupling element (KE1) of the deployment rod (AS); and said deployment means
- have a further coupling element (KE3) and a locking guide link (KV), of which the deployment rod (AS) has the one, and the sliding member (S) has the respective other;
such that
starting from the closed position of the cover (D), upon displacing the sliding member (S) in the longitudinal direction of the vehicle toward the rear, the deployment rod (AS) is decouplable from the sliding member (S) in a decoupling plane (AE) and in relation to the guide rail (FS) is locked in a form-fitting manner, wherein for locking, the further coupling element (KE3) and the locking guide link (KV) are mutually engaged in such a manner that introducing the coupling element (KE1) of the deployment rod (AS) into the pocket (T) is controllable substantially in the normal direction of the decoupling plane (AE).

2. Arrangement (AO) according to Claim 1, wherein the sliding member (S) has the locking guide link (KV), and the deployment rod (AS) has the further coupling element (KE3).

3. Arrangement (AO) according to Claim 1, wherein the sliding member (S) has the further coupling element (KE3), and the deployment rod (AS) has the locking guide link (KV).

4. Arrangement (AO) according to one of the preceding claims, wherein the deployment rod (AS) is biased in such a manner that a spring force in the normal direction of the decoupling plane (AE) acts in the direction of the pocket (T).

5. Arrangement (AO) according to one of the preceding claims, wherein a profile of the locking guide link (KV) in the longitudinal direction of the vehicle toward the rear has a front portion (VA) in which a spacing in the normal direction between the locking guide link (KV) and the pocket (T) remains the same, a central portion (MA) in which the spacing in the normal direction between the locking guide link (KV) and the pocket (T) is varied, and a rear portion (HA) in which the spacing in the normal direction between the locking guide link (KV) and the pocket (T) remains the same.

6. Arrangement (AO) according to Claim 5, wherein the spacing in the central portion (MA) is increased in the longitudinal direction of the vehicle toward the rear.

7. Arrangement (AO) according to one of the preceding claims, wherein the deployment rod (AS) in the closed position of the cover (D) by way of the coupling element (KE1) is coupled to the sliding member (S).

8. Arrangement (AO) according to one of the preceding claims, wherein the decoupling plane (AE) is defined by the longitudinal direction of the vehicle and by a vertical direction which is perpendicular thereto.

9. The arrangement (AO) according to one of the preceding claims, wherein the coupling elements (KE1, KE2) are configured as sliding elements, in particular as rotary sliding elements.

## Revendications

1. Agencement (AO) comprenant un couvercle (D) pour un toit de véhicule (FD) qui peut être soulevé à partir d'une position de fermeture pour fermer une ouverture de toit (DOE) pour l'ouverture par des moyens d'exposition dans sa région arrière et qui peut être déplacé vers l'arrière au-dessus du toit du véhicule (FD) dans une position ouverte, les moyens d'exposition
- présentant un chariot (S) déplaçable dans la direction longitudinale du véhicule dans un rail de guidage (FS) au moyen d'un entraînement ;
- une barre d'exposition (AS) déplaçable au moyen du chariot (S) dans la direction longitudinale du véhicule, avec un élément d'accouplement (KE1), la barre d'exposition (AS) étant accouplée au chariot (S) dans la position de fermeture du couvercle (D) ;
**caractérisé par**
- un logement (T) réalisé fixement par rapport au rail de guidage (FS), qui est adapté de par sa forme à l'élément d'accouplement (KE1) de la barre d'exposition (AS) ; et
- présentant un élément d'accouplement supplémentaire (KE3) et une coulisse de verrouillage (KV), la barre d'exposition (AS) présentant l'un de ceux-ci et le chariot (S) présentant l'autre, respectivement,
de telle sorte que
partant de la position de fermeture du couvercle (D) lors d'un déplacement du chariot (S) dans la direction longitudinale du véhicule vers l'arrière, la barre d'exposition (AS) puisse être désaccouplée du chariot (S) dans un plan de désaccouplement (AE) et soit verrouillée par rapport au rail de guidage (FS) par engagement par correspondance de formes, l'élément d'accouplement supplémentaire (KE3) ainsi que la coulisse de verrouillage (KV) étant en prise l'un avec l'autre pour le verrouillage de telle sorte qu'une introduction de l'élément d'accouplement (KE1) de la barre d'exposition (AS) dans le logement (T) puisse être commandée essentiellement dans la direction perpendiculaire au plan de désaccouplement (AE).

2. Agencement (AO) selon la revendication 1, dans lequel le chariot (S) présente la coulisse de verrouillage (KV) et la barre d'exposition (AS) présente l'élément d'accouplement supplémentaire (KE3) .

3. Agencement (AO) selon la revendication 1, dans lequel le chariot (S) présente l'élément d'accouplement supplémentaire (KE3) et la barre d'exposition (AS) présente la coulisse de verrouillage (KV).

4. Agencement (AO) selon l'une quelconque des revendications précédentes, dans lequel la barre d'exposition (AS) est précontrainte de telle sorte qu'une force de ressort agisse dans la direction perpendiculaire au plan de désaccouplement (AE) dans la direction du logement (T).

5. Agencement (AO) selon l'une quelconque des revendications précédentes, dans lequel une allure de la coulisse de verrouillage (KV) dans la direction longitudinale du véhicule vers l'arrière présente une portion avant (VA) dans laquelle une distance dans la direction perpendiculaire entre la coulisse de verrouillage (KV) et le logement (T) reste inchangée, une portion centrale (MA) dans laquelle la distance varie dans la direction perpendiculaire entre la coulisse de verrouillage (KV) et la poche (T), et une portion arrière (HA) dans laquelle la distance dans la direction perpendiculaire entre la coulisse de verrouillage (KV) et la poche (T) reste inchangée.

6. Agencement (AO) selon la revendication 5, dans lequel la distance dans la portion centrale (MA) dans la direction longitudinale du véhicule augmente vers l'arrière.

7. Agencement (AO) selon l'une quelconque des revendications précédentes, dans lequel la barre d'exposition (AS), dans la position de fermeture du couvercle (D) est accouplée au chariot (S) par le biais de l'élément d'accouplement (KE1).

8. Agencement (AO) selon l'une quelconque des revendications précédentes, dans lequel le plan de désaccouplement (AE) est tendu entre la direction longitudinale du véhicule et une direction verticale perpendiculaire à celle-ci.

9. Agencement (AO) selon l'une quelconque des revendications précédentes, dans lequel les éléments d'accouplement (KE1, KE2) sont réalisés sous forme d'éléments coulissants, en particulier de patins rotatifs.
